# EUROPEAN PATENT APPLICATION

(11) **EP 3 059 702 A1**
(43) Date of publication of application: **24.08.2016**
(21) Application number: 15305234.5
(22) Date of filing: 17.02.2015
(51) Int. Cl.: G06Q 20/32

(54) **Apparatuses, vehicle, methods and computer programs for providing first information related to at least one unique payment certificate to a creditor**

(71) Applicant: ALCATEL LUCENT, 92100 Boulogne-Billancourt (FR)
(72) Inventor: Hirler, Hans-Peter, 70435 Stuttgart (DE)
(74) Representative: 2SPL Patentanwälte PartG mbB

(57) **Abstract**

Embodiments related to apparatuses (10; 20; 30), a vehicle (100), methods and computer programs suitable for providing first information related to at least one unique payment certificate to a creditor (200). The apparatus (10) comprises at least one interface (12) to obtain second information related to the at least one unique payment certificate from a central certificate agency (300) and third information related to a request for the at least one unique payment certificate from the creditor (200), and to provide the first information related to the at least one unique payment certificate to the creditor (200). The apparatus 10 further comprises a storage module (14) to store information related to unique payment certificates. The apparatus 10 further comprises a control module (16) to provide the second information related to the at least one unique payment certificate to the storage module (14), to obtain the second information related to the at least one unique payment certificate from the storage module (14), and to determine the first information related to the at least one unique payment certificate based on the second information related to the at least one unique payment certificate and the third information related to the request for the at least one unique payment certificate.

## Description

### Technical Field

Embodiments related to apparatuses, a vehicle, methods and computer programs suitable for providing first information related to at least one unique payment certificate to a creditor, more particularly, but not exclusively based on second information related to the at least one unique payment certificate from a central certificate agency.

### Background

This section introduces aspects that may be helpful in facilitating a better understanding of the invention(s). Accordingly, the statements of this section are to be read in this light and are not to be understood as admissions about what is in the prior art or what is not in the prior art.

The construction of new roads and the renovation of existing roads increasingly leads to tolls being levied from vehicle drivers. In some cases, drivers might be charged for individual use (e.g. for stretches of a highway or for individual bridges), or flat fees might be levied for a fixed time (e.g. a week or a week) for all roads of a region or country. In some cases, tolls may reflect a current usage of the road, and/or might be used to balance and/or redirect traffic based on differing costs for different routes or times.

Industrie 4.0 (Industry 4.0) is a joint project of the Bundesverband Informationswirtschaft, Telekommunikation und neue Medien (BITKOM), Verband Deutscher Maschinen- und Anlagenbau (VDMA) and Zentralverband Elektrotechnik- und Elektronikindustrie (ZVEI) industrial organizations in Germany representing information technology, telecommunication, mechanical and plant engineering, and electrical engineering and electronics in Germany. Industrie 4.0 represents a fourth industrial revolution based on an organization and controlling of the value chain during the whole life cycle of products. This life cycle stretches from the conception and assignment via the engineering and manufacturing, the distribution to the consumer to the recycling of the product and includes related services. Industrie 4.0 is based on a real-time availability of relevant information by connecting the instances of the life cycle.

More information can be found in:

Plattform Industrie 4.0. (2014). Whitepaper der Plattform Industrie 4.0.
Retrieved from:
http://www.plattform-
i40.de/sites/default/files/Whitepaper_Forschung%20Stand%203.%20April%202014_0.pdf

VDI/VDE-Gesellschaft Mess- und Automatisierungstechnik (GMA). (2014). Industrie 4.0 Statusreport. Gegenstande, Entitaten, Komponenten.
Retrieved from:
http://www.vdi.de/fileadmin/vdi_de/redakteur_dateien/gma_dateien/VDI_Industrie_4.0_Kom ponenten_2014.pdf
VDI/VDE-Gesellschaft Mess- und Automatisierungstechnik (GMA). (2014). Thesen und Handlungsfelder. Cyber-Physical Systems: Chancen und Nutzen aus Sicht der Automation.
Retrieved from:
http://www.vdi.de/uploads/media/Stellungnahme_Cyber-Physical_Systems.pdf
VDI/VDE-Gesellschaft Mess- und Automatisierungstechnik (GMA). (2014). Statusreport. Industrie 4.0 Wertschöpfungsketten.
Retrieved from:
http://www.vdi.de/fileadmin/vdi_de/redakteur_dateien/gma_dateien/VDI_Industrie_4.0_Wert schoepfungsketten_2014.pdf

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, a vehicle, methods and computer programs suitable for providing first information related to at least one unique payment certificate to a creditor. As more and more components of transportation are charged individually, e.g. road and bridge tolling, parking, ferries, public transport etc., conventional means of paying, e.g. using cash or credit cards may offer downsides, as a payment process may lead to a substantial delay, may require holding adequate funds in the correct denomination, and may lead to processing charges. Embodiments may provide a streamlined scheme, in which unique payment certificates may be obtained from a central agency, held in the vehicle, a mobile device, or an electronic wallet, and transferred to the creditor or business. By using digital signatures and approving transactions in a central certificate agency, the unique payment certificates may be protected from unauthorized copying.

Embodiments provide an apparatus suitable for providing first information related to at least one unique payment certificate to a creditor. The apparatus comprises at least one interface to obtain second information related to the at least one unique payment certificate from a central certificate agency and third information related to a request for the at least one unique payment certificate from the creditor. The at least one interface is further configured to provide the first information related to the at least one unique payment certificate to the creditor. The apparatus further comprises a storage module to store information related to unique payment certificates. The apparatus further comprises a control module to provide the second information related to the at least one unique payment certificate to the storage module and to obtain the second information related to the at least one unique payment certificate from the storage module. The control module is further configured to determine the first information related to the at least one unique payment certificate based on the second information related to the at least one unique payment certificate and the third information related to the request for the at least one unique payment certificate. Using unique payment certificates, which may be (semi-) automatically transferred from a vehicle or mobile device to a creditor, may streamline the process of paying for a traffic related service, e.g. for a tolled road or bridge, parking, or refueling and may provide anonymity and reduced exposure of payment information towards the creditor.

In at least some embodiments, the apparatus may further comprise information related to an identification signature. The second information related to at least one unique payment certificate may be based on the information related to the identification signature and information related to an agency signature for the central certificate agency, which may protect the unique payment certificates from being stolen or misused by a third party.

In at least some embodiments, the control module may be further configured to provide the first information related to at least one unique payment certificate based on the information related to the identification signature, the information related to the agency signature, and information related to a creditor signature for the creditor. Providing the first information related to at least one unique payment certificate based on the information related to the identification signature, the information related to the agency signature, and information related to a creditor signature for the traffic related creditor may ensure that the unique payment certificates can be used and verified by the traffic related creditor and may make man-in-the-middle-attacks unfeasible.

In at least some embodiments, the creditor may correspond to a traffic related creditor corresponding to at least one element of the group of a toll station, a road charging station, a parking station, a filling station, a service station, an insurance provider, a tax collection infrastructure, a driving permission agency, a vehicle repair shop, a vehicle manufacturer, a replacement part manufacturer, a replacement part provider, a fast food restaurant, a convenience store, and a retail business. A wide-spread acceptance of unique payment certificates may provide convenience to a user and may reduce the overhead costs per transaction.

In at least some embodiments, a unique payment certificate may correspond to a sequence of binary digits according to a predetermined protocol format. A unique payment certificate may be based on at least one element of the group of an encryption cipher, a digital signature, and a digital watermark. Securing the unique payment certificate based on an encryption cipher, a digital signature, or a digital watermark may protect the unique payment certificates from being stolen or misused by a third party.

The first information related to the at least one unique payment certificate may correspond to a network packet for a communication network. The network packet may comprise at least one unique payment certificate. The first information related to the at least one unique payment certificate may correspond to a mobile certificate comprising at least one unique payment certificate. Using a predefined format for the first information related to the at least one unique payment certificate may lead to an efficient processing and acceptance across creditors equipped by different manufacturers.

In at least some embodiments, the control module may be configured to provide information related to a notification, via the at least one interface, in case an aggregated monetary amount of unique payment certificates in the storage module falls below a notification threshold. The at least one interface may be further configured to obtain information related to a purchase request, in response to the information related to the notification. The control module may be further configured to obtain information related to at least one further unique payment certificate from the central certificate agency and to store the information related to at least one further unique payment certificate using the storage module. Providing a notification in case an aggregated monetary amount of unique payment certificates in the storage module falls below a notification threshold may allow a user to purchase additional unique payment certificates and may prevent the user from running out of available unique payment certificates.

In at least some embodiments, the at least one interface may be further configured to obtain information related to a current cost of one or more routes. The control module may be further configured to provide information related to one or more preferred routes based on the information related to the current cost of the one or more routes. The information related to the current cost of the one or more routes may be used to balance traffic between the one or more routes, and may be used to calculate approximate total costs of a route.

In at least some embodiments, the control module may be configured to provide information related to aggregated payments for a specified length of time, via the at least one interface. The information related to the aggregated payments may be used to give the user an overview about aggregate spending for transportation, e.g. on a weekly/monthly/yearly basis, and may be used to identify more cost-effective alternatives.

In at least some embodiments, the control module may be configured to communicate via a network. The control module may be further configured to use a mobile certificate comprising at least one unique payment certificate as identification towards one or more network devices comprised in the network. The control module may communicate with other vehicles or traffic related entities, which may be part of the Internet of Things (IoT), and may relay information related to traffic situations, for example.

Embodiments further provide a vehicle comprising the apparatus suitable for providing first information related to at least one unique payment certificate to a creditor. The network packet comprises at least one unique payment certificate and information related to the vehicle. The control module may be further configured to provide information related to a condition of one or more components of the vehicle. The apparatus suitable for providing first information related to at least one unique payment certificate to a creditor, or traffic related creditor, may be comprised in the vehicle to streamline the payment process. The apparatus may further provide the information related to the condition of the one or more components of the vehicle to inform the traffic related creditors, e.g. vehicle repair shops or vehicle manufacturers, e.g. about required replacements of replacement parts or supplies.

Embodiments further provide an apparatus suitable for a creditor. The apparatus comprises at least one interface to obtain first information related to at least one unique payment certificate. The first information related to the at least one unique payment certificate is based on information related to an identification signature, information related to an agency signature, and information related to a creditor signature. The at least one interface is further configured to provide the first information related to the at least one unique payment certificate and the information related to the creditor signature to a central certificate agency, and to obtain information related to a validity of the first information related to the at least one unique payment certificate and information related to a reassigned information related to at least one unique payment certificate from the central certificate agency. The reassigned information related to the at least one payment certificate is based on the information related to the creditor signature and the information related to the agency signature. The at least one interface is further configured to provide information related to a transaction status. The apparatus further comprises a control module to determine the information related to the transaction status based on the information related to the validity of the first information related to the at least one unique payment certificate. Verifying the first information related to the at least one unique payment certificate using the central certificate agency and receiving the reassigned information related to the at least one payment certificate based on the information related to the creditor signature in response to the first information related to the at least one unique payment certificate may make man-in-the-middle-attacks unfeasible and may protect the unique payment certificates from being stolen or misused by a third party.

In at least some embodiments, the control module may be configured to determine the information related to the transaction status based on the first information related to the at least one unique payment certificate and information related to compromised certificates. The information related to the comprised certificates may comprise information related to one or more invalidated certificates. Checking the first information related to the at least one unique payment certificate, e.g. the information related to the identification signature and/or the information related to the agency signature, against the information related to compromised certificates may help protect the creditor against malicious customers or certificate agencies.

Embodiments further provide an apparatus suitable for a central certificate agency. The apparatus comprises at least one interface to obtain information related to an identification signature and to provide second information related to at least one unique payment certificate. The at least one interface is further configured to obtain first information related to at least one unique payment certificate and information related to a creditor signature. The first information related to at least one unique payment certificate is based on the information related to the identification signature, information related to an agency signature, and the information related to a creditor signature. The at least one interface is further configured to provide information related to a validity of the first information related to the at least one unique payment certificate and information related to a reassigned information related to at least one unique payment certificate. The apparatus further comprises a control module to determine the second information related to the at least one unique payment certificate based on the information related to the identification signature and information related to the agency signature. The control module is further configured to determine the information related to the validity of the first information related to the at least one unique payment certificate based on the information related to the agency signature, the information related to the creditor signature, and the information related to the identification signature. The control module is further configured to determine the information related to the reassigned information related to the at least one unique payment certificate based on the first information related to at least one unique payment certificate, the information related to the creditor signature, and the information related to the agency signature. Providing the second information related to the at least one payment certificate based on the information related to the identification signature and the information related to the agency signature, providing the information related to the reassigned information related to the at least one unique payment certificate based on the first information related to at least one unique payment certificate, the information related to the creditor signature, and the information related to the agency signature, and verifying the first information related to the at least one unique payment certificate based on the information related to the agency signature, the information related to the creditor signature, and the information related to the identification signature may make man-in-the-middle-attacks unfeasible and may protect the unique payment certificates from being stolen or misused by a third party.

Embodiments further provide a method suitable for providing first information related to at least one unique payment certificate to a creditor. The method comprises obtaining second information related to the at least one unique payment certificate from a central certificate agency. The method further comprises obtaining third information related to a request for the at least one unique payment certificate from the creditor and providing the first information related to the at least one unique payment certificate to the creditor. The method further comprises storing information related to unique payment certificates, providing the second information related to the at least one unique payment certificate to the storage module and obtaining the second information related to the at least one unique payment certificate from the storage module. The method further comprises determining the first information related to the at least one unique payment certificate based on the second information related to the at least one unique payment certificate and the third information related to the request for the at least one unique payment certificate.

Embodiments further provide a method suitable for a creditor, the method comprises obtaining first information related to at least one unique payment certificate. The first information related to at least one unique payment certificate is based on information related to an identification signature, information related to an agency signature, and information related to a creditor signature. The method further comprises providing the first information related to the at least one unique payment certificate and the information related to the creditor signature to a central certificate agency. The method further comprises obtaining information related to a validity of the first information related to the at least one unique payment certificate and information related to a reassigned information related to at least one unique payment certificate from the central certificate agency. The reassigned information related to the at least one payment certificate is based on the information related to the creditor signature and the information related to the agency signature. The method further comprises providing information related to a transaction status. The method further comprises determining the information related to the transaction status based on the information related to the validity of the first information related to the at least one unique payment certificate.

Embodiments further provide a method for a central certificate agency. The method comprises obtaining information related to an identification signature and providing second information related to at least one unique payment certificate. The method further comprises obtaining first information related to at least one unique payment certificate and information related to a creditor signature. The first information related to at least one unique payment certificate is based on the information related to the identification signature, information related to an agency signature, and the information related to the creditor signature. The method further comprises providing information related to a validity of the first information related to the at least one unique payment certificate and information related to a reassigned information related to at least one unique payment certificate. The method further comprises determining the second information related to the at least one unique payment certificate based on the information related to the identification signature and information related to the agency signature. The method further comprises determining the information related to the validity of the first information related to the at least one unique payment certificate based on the information related to the agency signature, the information related to the creditor signature, and the information related to the identification signature and determining the information related to the reassigned information related to the at least one unique payment certificate based on the first information related to the at least one unique payment certificate, the information related to the creditor signature, and the information related to the agency signature.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a block diagram of an embodiment of an apparatus suitable for providing first information related to at least one unique payment certificate to a creditor;
- Fig. 2: illustrates a packet structure of a mobile certificate;
- Fig. 2a: illustrates a block diagram of an embodiment of a system.
- Fig. 3: illustrates a block diagram of an embodiment of an apparatus suitable for providing first information related to at least one unique payment certificate to a creditor;
- Fig. 4: illustrates a block diagram of an embodiment of a vehicle comprising the apparatus suitable for providing first information related to at least one unique payment certificate to a creditor;
- Fig. 5: illustrates a block diagram of an embodiment of an apparatus suitable for a creditor;
- Fig. 6: illustrates a block diagram of an embodiment of an apparatus suitable for a central certificate agency;
- Fig. 7: illustrates a transactions diagram of an embodiment;
- Fig. 8: illustrates a block diagram of an embodiment of a method suitable for providing first information related to at least one unique payment certificate to a creditor;
- Fig. 9: illustrates a block diagram of an embodiment of a method suitable for a creditor; and
- Fig. 10: illustrates a block diagram of an embodiment of a method suitable for a central certificate agency.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

As more and more transportation costs, e.g. road and bridge tolls, carbon certificates, city center tolls, rush hour tolls, public transport tickets etc. may generate a large number of individual payment transactions, manual payment methods, such as cash or credit care, may impose a substantial delay in the processing of such payment transactions. Also, as payment creditors, such as tollbooths, may generate detailed profiles of the vehicles, and credit card and bank information has been stolen numerous times, users may be hesitant to expose their permanent payment information to a multitude of creditors for privacy and security reasons.

Current approaches may be based on bank transfer, online banking, pay-office or pay-box with cash payment or e-cash card. The driver may be required to halt the vehicle or go to the pay office/pay-automat and process the payment, and may even have to wait due to queues and the time required for processing and interaction.

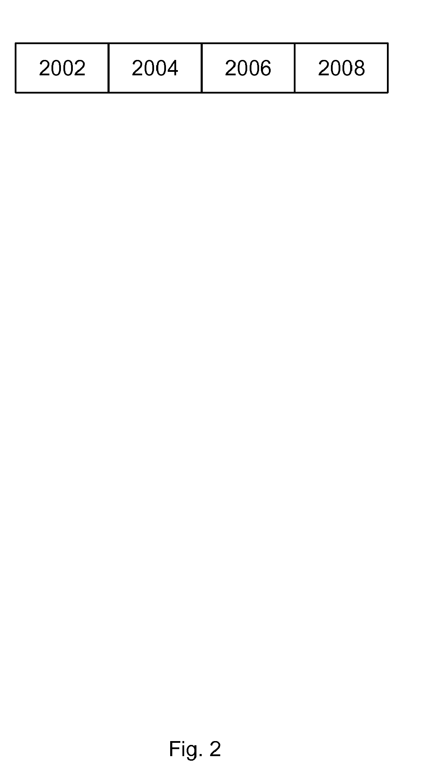

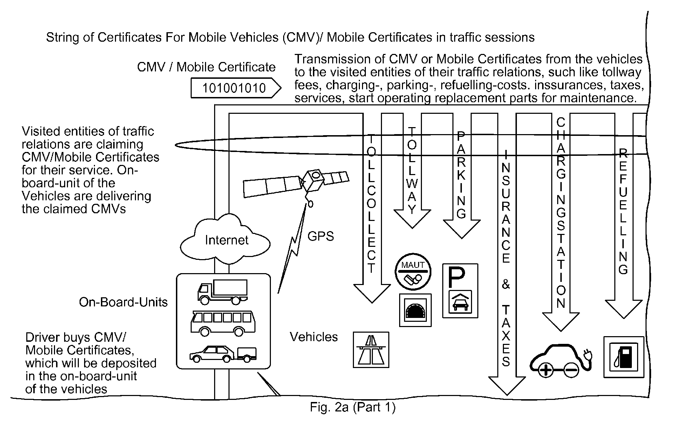

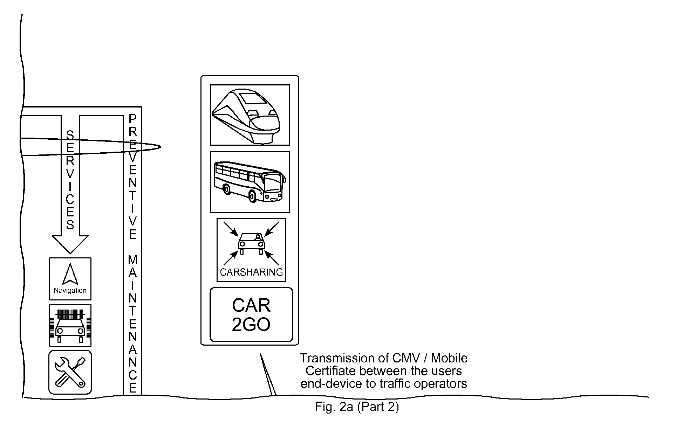

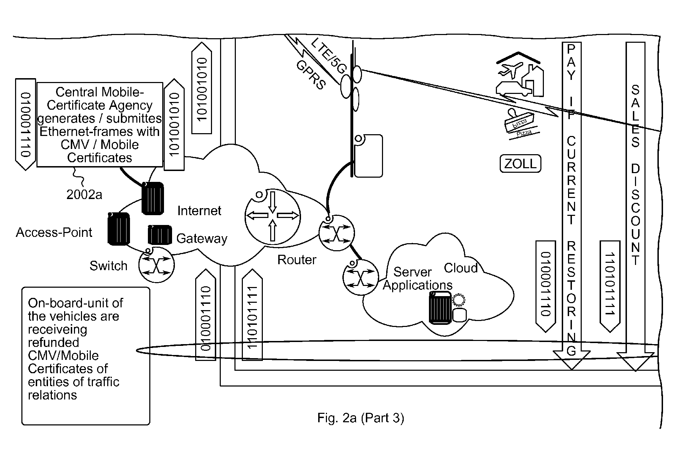

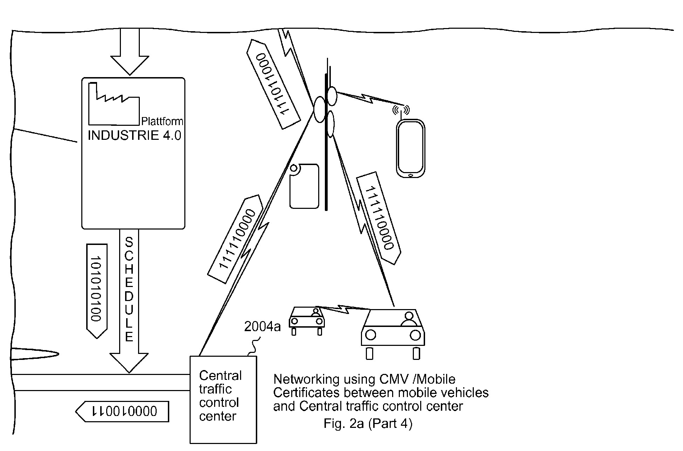

Fig. 2a illustrates a block diagram of an embodiment of a system. In the system, costs occurring during transportation, which may be incurred by mobile vehicles like cars, busses, trucks, motor-cycles may be managed and paid for with Certificates For Mobile Vehicles (CMV), which may transferred automatically from a built in central unit of a vehicle or from another device.

When a vehicle visits and/or traverses entities of a traffic related creditor, the traffic related creditor may request payment towards the on-board unit or device for the services, permissions, charges, materials or components used. Before, after or during the transportation related procedure, one or more unique payment certificates may be retrieved by the traffic related creditors from the on-board unit of the vehicle or from another device.

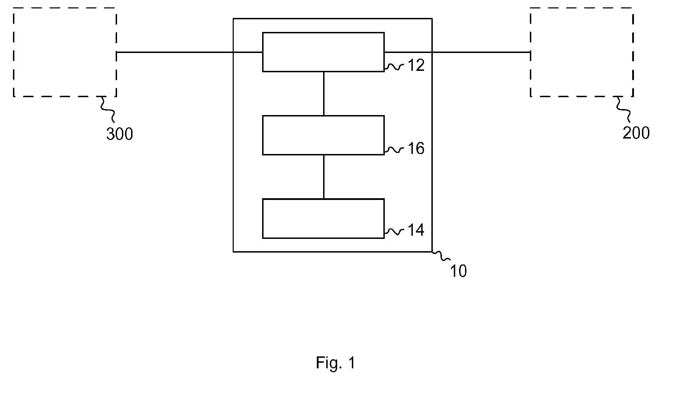

Embodiment may use electronic Certificates for Mobile Vehicles (CMV), or unique payment certificates as introduced below (Fig. 1). In embodiments, such unique payment certificates may be comprised in a network packet or may be comprised in a Mobile Certificate (MC).

The unique payment certificates, or CMV, may be generated by a central certificate agency. The vehicle driver may acquire the unique payment certificates via internet, and may store them on the on board unit of his vehicle or other device, such as e.g. a smart phone or laptop computer. The unique payment certificates may be comprised in network packets, or may be comprised in a predefined data format specified for unique payment certificates. The entities of the visited traffic related creditors may retrieve the unique payment certificates from the related vehicles. When the driver uses a service of a traffic related creditor, the traffic related creditor may request the costs in form of CMV for the service, permission, charges, material or components, which have been provided. The CMV, which may be deposited on a vehicle's on board unit or a driver's terminal equipment, may be transmitted to the requesting traffic related creditor or to an associated account. The contingent of CMV may be removed step by step from the vehicles account (which may be deposited at the on board unit or a driver's terminal unit) relative to the price or length of services, permissions, charges, materials and components. In embodiments, traffic related creditors may provide a discount for payment via CMV.

Creditors may exchange the CMV into monetary currency at the central certificate agency, or they may resell the CMV, e.g. via the internet

For CMV, there may be an input/output balance between paid and earned CMV. The same may apply to Mobile Certificates. New billing and payment models may be based on CMV or mobile certificates. CMV and mobile certificates may be traded via the internet. A central certificate agency (e.g. under supranational supervision), may have the exclusive right to generate CMV and/or mobile certificates. The central certificate agency may provide offers for selling and buying CMV and/or for mobile certificates.

In at least some embodiments, CMV and Mobile Certificates may be valid and interoperable in telecommunication and smart power networks. The driver may buy them with the respective currency of the economic area or with a networkable binary accounting unit or currency. The number of CMV's and Mobile Certificates might not be limited. A user may buy CMVs or mobile certificates based on his monthly or annual requirement.

A traffic related creditor may correspond to a toll booth, a charging station, a parking garage, a gas station, an insurance provider, a taxing entity, a driving permission agency, a service provider, or a provider of replacement parts for maintenance in the frame of "INDUSTRIE 4.0", for example. In at least some embodiments, a Mobile Certificate may be comprised in tags for the INDUSTRIE 4.0 life cycle, and may be used from the material planning process through the whole life cycle of the product.

In at least some embodiments, CMVs, or unique payment certificates may be used in a more general context, e.g. at general retail locations. In some embodiments, an apparatus 10, as introduced subsequently in Fig. 1, may be comprised in an electronic wallet. Near Field Communication (NFC) may be used to communicate with the register at the retail location. A central certificate agency, as introduced subsequently in Fig. 1-6, may be used to provide a translation towards the NFC payment process.

Inside metropolitan areas, embodiments may be used to provide traffic engineering infrastructure with traffic control and controlled drive in /drive out balance to the outlying area, and traffic balancing based on variable toll charges. In at least some embodiments, the unique payment certificates may be tradable via the internet. Mobile certificates might be used as identification in a network of vehicles, e.g. in the internet of things, which vehicles may communicate among themselves and might communicate with a central traffic control center that coordinates and/or balances the traffic.

Fig. 1 illustrates a block diagram of an embodiment of an apparatus 10 suitable for providing first information related to at least one unique payment certificate to a creditor 200. Fig. 1 further shows a central certificate agency 300. The apparatus 10 comprises at least one interface 12, a storage module 14, and a control module 16. The at least one interface 12 is coupled to the creditor 200, the central certificate agency 300 and the control module 16. The control module 16 is further coupled to the storage module 14.

In at least some embodiments, a unique payment certificate may correspond to a sequence of binary digits according to a predetermined protocol format. A unique payment certificate may be based on at least one element of the group of an encryption cipher, a digital signature, and a digital watermark. The first information related to the at least one unique payment certificate may correspond to a network packet for a communication network, the network packet comprising at least one unique payment certificate. In at least some embodiments, the first information related to the at least one unique payment certificate may be comprised in a network packet payload. In embodiments, the network may correspond to any wireless or wirebound network, e.g. the internet, or a mobile communication network. In another embodiment, the first information related to the at least one unique payment certificate may correspond to a mobile certificate comprising at least one unique payment certificate.

In at least some embodiments, a unique payment certificate and/or a mobile certificate comprise correspond to an intrinsic monetary value. In various embodiments, the intrinsic monetary value may be lost when the unique payment certificate and/or the mobile certificate is deleted or lost.

Fig. 2 illustrates a block diagram of an implementation of a mobile certificate. In at least some embodiments, the mobile certificate may correspond to a data frame. The mobile certificate may comprise at least a destination address 2002, a source address 2004, a data section 2006 and a certificate section 2008. In various embodiments, the mobile certificate may comprise delimiters to denote the beginning and the end of the data frame. The certificate section 2008 may contain information related to one or more payment certificates. The mobile certificate may have the same size as the normal network packet or Ethernet frame (e.g. up to the limit of 1500 Byte) and may have a specified format, for example.

In at least some embodiments, mobile certificates may be extensible, e.g. their functionality can be expanded or changed into other or autonomous functions. In at least some embodiments, the data section 2006 may comprise information related to a data descriptor. In at least some embodiments, the information related to the data descriptor may comprise information related to key-value pairs. In at least some embodiments, the information related to the data descriptor may comprise nested descriptions of data formats. In at least some embodiments, the information related to the data descriptor may be based on the extensible Markup Language (XML). In at least some embodiments, the information related to the data descriptor may be used to define payload data of the mobile certificate, e.g. for the certificate section 2008. In an example implementation, the information related to the data descriptor might be used to specify a universally valid monetary function (payment) or certificates for tradable energy certificates.

In at least some embodiments, the creditor 200 may correspond to a traffic related creditor corresponding to at least one element of the group of a toll station, a road charging station, a parking station, a filling station, a service station, an insurance provider, a tax collection infrastructure, a driving permission agency, a vehicle repair shop, a vehicle manufacturer, a replacement part manufacturer, a replacement part provider, a fast food restaurant, a convenience store, and a retail business.

The apparatus 10 comprises at least one interface 12 to obtain second information related to the at least one unique payment certificate from a central certificate agency 300. In embodiments, the central certificate agency 300 may correspond to a bank, a central bank, a monetary authority, a provider of a mobile communication system, a government entity, an exchange, or a trading house. In at least some embodiments, the apparatus 10 may further comprise information related to an identification signature. The second information related to at least one unique payment certificate may be based on the information related to the identification signature and information related to an agency signature for the central certificate agency 300. In at least some embodiments, the second information related to the at least one unique payment certificate may be encrypted and/or signed with the identification signature and the agency signature. In at least some embodiments, the information related to the identification signature may correspond to a public key of a public and private key pair of the identification signature. In at least some embodiments, the information related to the agency signature may correspond to a public key of a public and private key pair of the agency signature.

The at least one interface is further configured to obtain third information related to a request for the at least one unique payment certificate from the creditor 200. In at least some embodiments, the information related to the request may comprise information related to a an amount of unique payment certificates requested by the creditor 200, and at least one element of the group of information related to a monetary amount, information related to a description, information related to a creditor signature for the creditor 200, information related to transmission parameters, and information related to accepted formats for the first information related to one or more unique payment certificates.

The at least one interface 12 is further configured to provide the first information related to the at least one unique payment certificate to the creditor 200.

The at least one interface 12, and correspondingly the at least one interface 22 and the at least some interface 32 as introduced subsequently may correspond to one or more inputs and/or outputs for receiving and/or transmitting information, which may be in digital (bit) values according to a specified code, within a module, between modules or between modules of different entities.

The apparatus 10 further comprises a storage module 14 to store information related to unique payment certificates. In at least some embodiments, the storage module 14 may comprise at least one element of the group a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), a network storage, or a cloud storage.

The apparatus 10 further comprises a control module 16 to provide the second information related to the at least one unique payment certificate to the storage module 14 and to obtain the second information related to the at least one unique payment certificate from the storage module 14. In at least some embodiments, the control module 16 may be configured to extract the at least one unique payment certificate from the information related to the at least one unique payment certificates. In at least some embodiments, the control module 16 may be configured to provide and/or obtain the second the second information related to the at least one unique payment certificate using a database management language.

The control module 16 is further configured to determine the first information related to the at least one unique payment certificate based on the second information related to the at least one unique payment certificate and the third information related to the request for the at least one unique payment certificate.

In embodiments the control module 16, and correspondingly the control modules 24 and 34 as will be introduced in the sequel, may be implemented using one or more processing units, one or more processing devices, any means for processing, such as a processor, a computer or a programmable hardware component being operable with accordingly adapted software. In other words, the described functions of the control modules 16, 24 and 34 may as well be implemented in software, which is then executed on one or more programmable hardware components. Such hardware components may comprise a general purpose processor, a Digital Signal Processor (DSP), a micro-controller, etc.

In at least some embodiments, the control module may be further configured to provide the first information related to at least one unique payment certificate based on the information related to the identification signature, the information related to the agency signature, and information related to a creditor signature for the creditor 200. In at least some embodiments, the first information related to the at least one unique payment certificate may be encrypted and/or signed with the identification signature, the agency signature, and the creditor signature. In at least some embodiments, the information related to the creditor signature may correspond to a public key of a public and private key pair of the creditor signature.

In at least some embodiments, the control module 16 may be configured to provide information related to a notification, via the at least one interface 12, in case an aggregated monetary amount of unique payment certificates in the storage module 14 falls below a notification threshold. In at least some embodiments, a unique payment certificate may comprise or correspond to a monetary amount, which may be expressed in a currency. In at least some embodiments, the monetary amount of a unique payment certificate may be fixed to one or more currencies, or it may vary based on a market situation. In at least some embodiments, the monetary amount of the unique payment certificates in the storage module 14 may correspond to a sum of the single monetary amounts of all or a subset of all unique payment certificates in the storage module 14. In at least some embodiments, the information related to a notification may comprise information related to the aggregated monetary amount of the unique payment certificates in the storage module 14. In at least some embodiments, the information related to a notification may further comprise information related an estimated time for the funds left, information related to buying options for buying further unique payment certificate from the central certificate agency 300, and/or information related to aggregated payments for a specified length of time. In at least some embodiments, an optional touchscreen and/or an optional Head-Up-Display (HUD) may be used to display a notification, based on the information related to the notification.

The at least one interface 12 may be further configured to obtain information related to a purchase request, in response to the information related to the notification. In at least some embodiments, an optional control module for the optional touchscreen may be configured to transmit the information related to the purchase request, based on touch-based events in a graphical user interface on the optional touchscreen. The control module 16 may be further configured to obtain information related to at least one further unique payment certificate from the central certificate agency 300 and to store the information related to at least one further unique payment certificate using the storage module 14.

In an implementation, if the unique payment certificate of a vehicle or a driver are drawing to a close, in time a notification may come up on a display. The driver may now have the possibility of avoiding an exhaustion of funds during the next traffic session by additionally purchasing additional unique payment certificates. If not, exhaustion may occur later, when a reserve is consumed.

In at least some embodiments, the at least one interface 12 may be further configured to obtain information related to a current cost of one or more routes. The control module 16 may be further configured to provide information related to one or more preferred routes based on the information related to the current cost of the one or more routes. In at least some embodiments, the at least one interface 12 may be further configured to obtain information related to a recommended route. The control module 16 may be further configured to provide the information related to the one or more preferred routes based on the information related to the recommended route.

In an implementation, a central traffic control center may provide a regulation of the transportation system by controlling traffic load, based on unique payment certificates or mobile certificates, by transmitting the information related to the recommended route. The central traffic control center may provide a uniform utilization through scale/tariff controlled load shifting. The route choice of the vehicles may be determined by the control module 16, based on the information related to the recommended route, which may be comprised in the unique payment certificates or the mobile certificates, which may be transmitted from the central traffic control center onto the navigation system of the on board unit further comprising the apparatus 10.

In at least some embodiments, the control module 16 may be configured to provide information related to aggregated payments for a specified length of time, via the at least one interface 12. In at least some embodiments, the information related to the aggregated payments may comprise information related to a monetary value of transactions for a specified length of time. The specified length of time may correspond to a rolling time-window (e.g. the last 7 days, the last 24 hours) or to a fixed time frame (e.g. the current month). In at least some embodiments, the optional touchscreen and/or the optional Head-Up-Display (HUD) may be used to display an information screen, based on the information related to the aggregated payments. In various embodiments, the information related to the aggregated payments may comprise a subset of all transactions, based on information related to a type of a transaction.

In an implementation, real time cost monitoring on the touchscreen or HUD may also be applicable to other chargeable services, which may be accessible via a network, e.g. taxes (boarder taxes, revenue services, vehicle taxes) and insurances, refueling, ticketing (booking, accounting and billing system for several means of transportation).

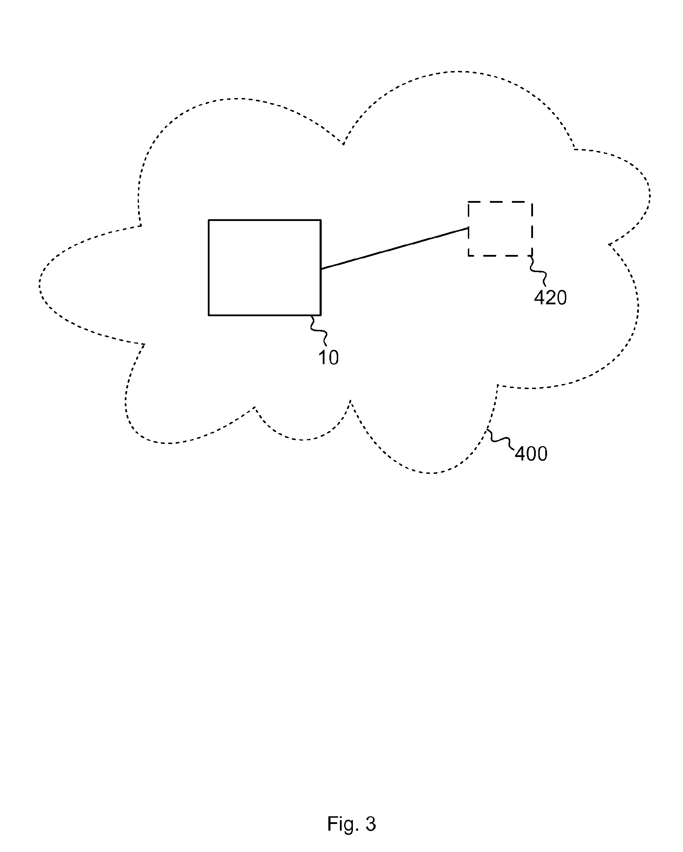

Fig. 3 illustrates a block diagram of an embodiment of the apparatus 10 communicating via a network 400, comprising one or more network devices 420. In at least some embodiments, the control module 16 may be configured to communicate via the network 400. The control module 16 may be further configured to use a mobile certificate comprising at least one unique payment certificate as identification towards the one or more network devices 420 comprised in the network 400. In at least some embodiments, the mobile certificate may comprise information related to a network address, e.g. an Internet Protocol address (e.g. IPv4 and/or IPv6).

Out of the IPv6 address-resources, a mobile certificate may be assigned an IP-address. The mobile certificates may exist permanently and not temporarily, as e.g. network packets during a traffic session. A supranational Central Mobile Certificate Agency 2002a, which may correspond to the central certificate agency 300, may generate the mobile certificates and assign the IP-address to certificates. A mobile certificate may exist before, during and after a traffic session. In at least some embodiments, internetworking between vehicles and the central traffic control center 2004a may be provided, based on the information related to the network access. In at least some embodiments, the creditor 200, the central certificate agency 300 and/or the central traffic control center may provide a connection to the internet, access to the Global Positioning System (GPS), mobile communications (GPRS, UMTS, LTE, 5G) to the apparatus 10, with a recourse and fallback to server applications and data centers in the cloud.

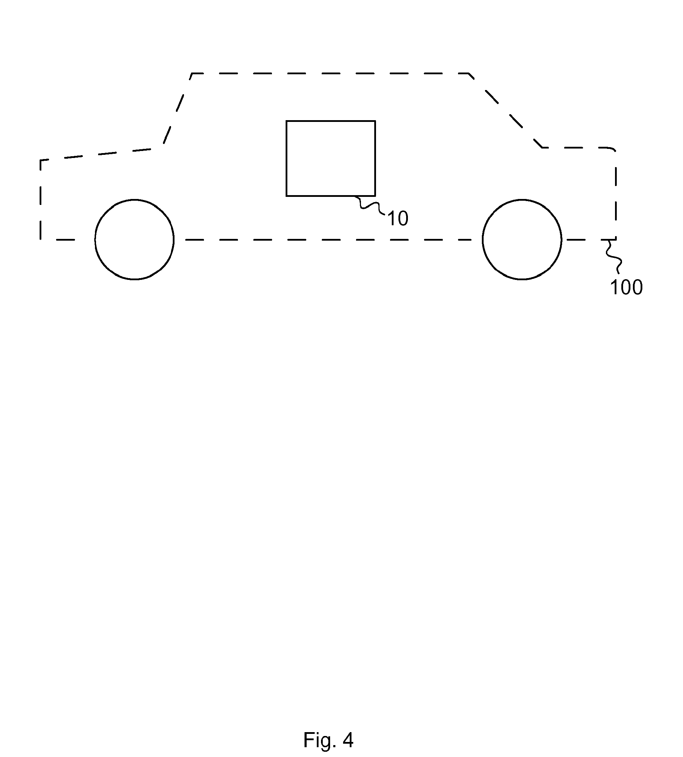

Fig. 4 illustrates a block diagram of an embodiment of a vehicle 100 comprising the apparatus 10. The network packet comprises at least one unique payment certificate and information related to the vehicle 100. In at least some embodiments, the control module 16 may be further configured to provide information related to a condition of one or more components of the vehicle 100. The information related to the vehicle 100 may comprise the information related to the condition of the one or more components of the vehicle 100.

In an implementation, the information related to the vehicle 100 and the information related to the condition of the one or more component of the vehicle 100 may be processed in an INDUSTRIE 4.0 environment. Wear parts and operational states of the vehicle, which may be comprised in the information related to the condition of the one or more components of the vehicle 100, may be used in the INDUSTRIE 4.0 platform and may act as a part of a Cyber-Physical-System, which may integrate computation with physical processes. The use of the information related to the condition of the one or more component of the vehicle 100 may permit new value chains in the after sales market.

In at least some embodiments, the one or more components of the vehicle 100 may communicate via the network 400 as part of the Internet of Things (IoT). Components comprised in the one or more components may have an identification tag, e.g. within the context of a Cyber Physical System (CPS), and network address, and may transmit the information related to the condition of the one or more component of the vehicle 100. Interface of the INDUSTRIE 4.0 platform may automatically initiate further processes (e.g. order of production, scheduling), based on the information related to the condition of the one or more component of the vehicle 100.

In at least some embodiments, the network packet may be constructed similar or based on an Ethernet package or an Internet Protocol package. The payload of the network packet may comprise information related to one or more unique payment certificates and may have additional capacity for the information related to the vehicle. In at least some embodiments, a mobile certificate may further comprise the information related to the vehicle.

In at least some embodiments, one or more unique payment certificates may be used for refunding restored electrical energy from electric vehicles (e.g. when the vehicle connected to a smart power grid) and for sales discount when purchasing vehicles, fuel and other vehicle related products and goods.

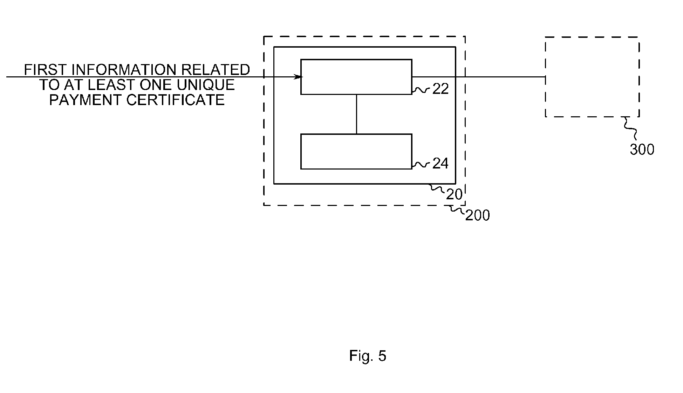

Fig. 5 illustrates a block diagram of an embodiment of an apparatus 20 suitable for a creditor 200. The apparatus 20 comprises at least one interface 22 and a control module 24. The at least one interface is coupled to the control module 24, and to a central certificate agency 300. In at least some embodiments, the creditor 200 may correspond to a traffic related creditor corresponding to at least one element of the group of a toll station, a road charging station, a parking station, a filling station, a service station, an insurance provider, a tax collection infrastructure, a driving permission agency, a vehicle repair shop, a vehicle manufacturer, a replacement part manufacturer, a replacement part provider, a fast food restaurant, a convenience store, or a retail business.

The apparatus 20 comprises the at least one interface 22 to obtain first information related to at least one unique payment certificate. The first information related to the at least one unique payment certificate is based on information related to an identification signature, information related to an agency signature, and information related to a creditor signature.

The at least one interface 22 is further configured to provide the first information related to the at least one unique payment certificate and the information related to the creditor signature to a central certificate agency 300 and to obtain information related to a validity of the first information related to the at least one unique payment certificate and information related to a reassigned information related to at least one unique payment certificate from the central certificate agency 300. The reassigned information related to the at least one payment certificate is based on the information related to the creditor signature and the information related to the agency signature. In at least some embodiments, the information related to the validity of the first information related to the at least one unique payment information may be based on the information related to the identification signature, the information related to the agency signature, and information related to the creditor signature. In at least some embodiments, the central certificate agency 300 may be configured to verify the signatures. In at least some embodiments, the central certificate agency 300 may be configured to remove the identification signature from the information related to the first information related to the at least one unique payment certificate for the reassigned information related to at least one unique payment certificate.

The at least one interface 22 is further configured and to provide information related to a transaction status. The apparatus 20 further comprises a control module 24 to determine the information related to the transaction status based on the information related to the validity of the first information related to the at least one unique payment certificate. In at least some embodiments, the information related to the transaction status may correspond to a bit sequence indicating an accepted or an rejected transaction, and/or the information related to the transaction status may be based on the information related to the agency signature, the information related to the identification signature, and the information related to the creditor signature, and may be comprised in the information related to the validity.

In at least some embodiments, the control module 24 may be configured to determine the information related to the transaction status based on the first information related to the at least one unique payment certificate and information related to compromised certificates, wherein the information related to the comprised certificates comprises information related to one or more invalidated certificates. In at least some embodiments, the information related to the compromised certificates comprises or corresponds to a certificate revocation list. In at least some embodiments, the information related to the comprised certificates may be based on bloom filters for compression.

More details and aspects of the apparatus 20 (e.g. unique payment certificate, first information related to the at least one unique payment certificate, information related to an identification signature, information related to an agency signature, information related to a creditor signature) are mentioned in connection with the proposed concept or one or more examples described above (e.g. Fig. 1 to 4). The apparatus 20 may comprise one or more additional optional features corresponding to one or more aspects of the proposed concept or one or more examples described above or below.

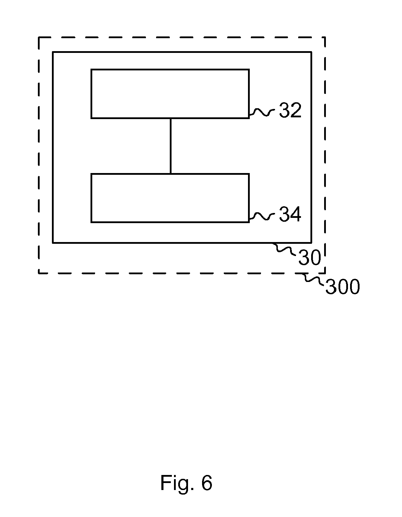

Fig. 6 illustrates a block diagram of an embodiment of an apparatus 30 suitable for a central certificate agency 300. The apparatus 30 comprises at least one interface 32 and a control module 34, which is coupled to the at least one interface 32. In embodiments, the central certificate agency 300 may correspond to a bank, a central bank, a monetary authority, a provider of a mobile communication system, a government entity, an exchange, or a trading house.

The apparatus 30 comprises at least one interface 32 to obtain information related to an identification signature and provide second information related to at least one unique payment certificate.

The at least one interface 32 is further configured to obtain first information related to at least one unique payment certificate and information related to a creditor signature. The first information related to at least one unique payment certificate is based on information related to the identification signature, information related to an agency signature, and information related to a creditor signature.

The at least one interface 32 is further configured to provide information related to a validity of the first information related to the at least one unique payment certificate and information related to a reassigned information related to at least one unique payment certificate; and

The apparatus 30 further comprises a control module 34 to determine the second information related to the at least one unique payment certificate based on the information related to the identification signature and information related to the agency signature. In at least some embodiments, the control module 34 may be configured to apply digital signatures to the at least one unique payment certificate based on the information related to the agency signature and the information related to the identification signature for the second information related to the at least one unique payment certificate. In at least some embodiments, the control module 34 may be configured to generate the at least one unique payment certificate.

The control module 34 is further configured to determine the information related to the validity of the first information related to the at least one unique payment certificate based on the information related to the agency signature, the information related to the creditor signature, and the information related to the identification signature. In at least some embodiments, the control module 34 may be configured to verify the signatures by comparing the information related to the creditor signature and/or the information related to the identification signature with information related to reference signatures. In at least some embodiments, the control module 34 may be configured to determine an ownership of the at least one unique payment certificate, bases on information related to a unique payment certificate registry. The control module 34 is further configured to determine the information related to the validity of the first information related to the at least one unique payment certificate based on the information related to the ownership.

The control module 34 is further configured to determine the information related to the reassigned information related to the at least one unique payment certificate based on the first information related to the at least one unique payment certificate, the information related to the creditor signature, and the information related to the agency signature. In at least some embodiments, the central certificate agency may be configured to remove the identification signature from the information related to the first information related to the at least one unique payment certificate for the reassigned information related to at least one unique payment certificate.

More details and aspects of the apparatus 30 (e.g. unique payment certificate, first information related to the at least one unique payment certificate, information related to an identification signature, information related to an agency signature, information related to a creditor signature, reassigned information related to the at least one payment certificate) are mentioned in connection with the proposed concept or one or more examples described above (e.g. Fig. 1 to 5). The apparatus 30 may comprise one or more additional optional features corresponding to one or more aspects of the proposed concept or one or more examples described above or below.

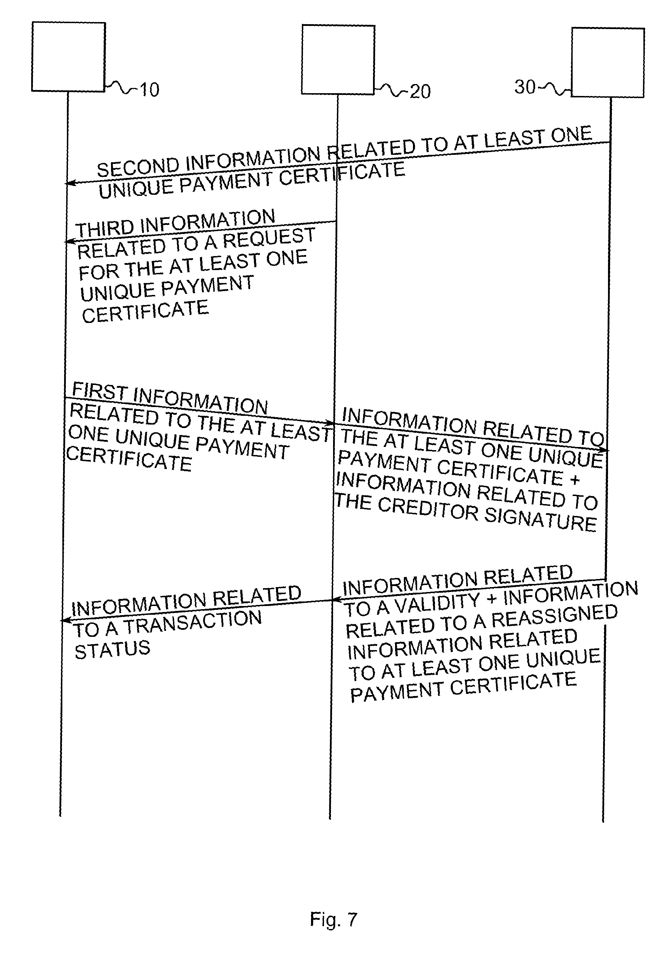

Fig. 7 illustrates a transaction diagram of an embodiment of a system comprising an apparatus 10 suitable for providing first information related to at least one unique payment certificate to a creditor 200, an apparatus 20 suitable for a creditor 200, and an apparatus 30 suitable for a central certificate agency 300. In at least some embodiments, the apparatus 10 may first be configured to obtain second information related to at least one unique payment certificate from the apparatus 30. When the apparatus 20 provides third information related to a request for at least one unique payment certificate to the apparatus 10, in response, the apparatus 10 may provide the first information related to the at least one unique payment certificate to the apparatus 20. The apparatus 20 may then forward the information related to the at least one unique payment certificate to the apparatus 30 and further provide information related to a creditor signature to the apparatus 30. In response, the apparatus 30 may provide information related to a validity of the first information related to the at least one unique payment certificate and information related to a reassigned information related to at least one unique payment certificate to the apparatus 20. The apparatus 20 may then provide information related to a transaction status to the apparatus 10.

In at least some embodiments, the apparatus 10, the apparatus 20, and the apparatus 30 may communicate via a communication network, e.g. the internet, a mobile communication network, and/or a closed traffic network, or any wireless or wired network. In at least some embodiments, the apparatus 10 and the apparatus 20 may communicate using a short range communication network, e.g. Wireless Local Area Network (WLAN), Near Field Communication (NFC), and/or a Bluetooth network.

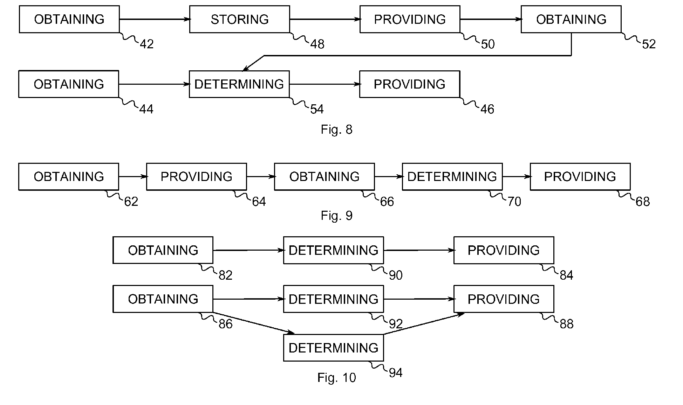

Fig. 8 illustrates a flow chart of an embodiment of a method suitable for providing first information related to at least one unique payment certificate to a creditor 200. The method comprises obtaining 42 second information related to the at least one unique payment certificate from a central certificate agency 300. The method further comprises obtaining 44 third information related to a request for the at least one unique payment certificate from the creditor 200 and providing 46 the first information related to the at least one unique payment certificate to the creditor 200. The method further comprises storing 48 information related to unique payment certificates, providing 50 the second information related to the at least one unique payment certificate to the storage module 14, and obtaining 52 the second information related to the at least one unique payment certificate from the storage module 14. The method further comprises determining 54 the first information related to the at least one unique payment certificate based on the second information related to the at least one unique payment certificate and the third information related to the request for the at least one unique payment certificate.

Fig. 9 shows a flow chart of an embodiment of a method suitable for a creditor 200. The method comprises obtaining 62 first information related to at least one unique payment certificate. The first information related to at least one unique payment certificate is based on information related to an identification signature, information related to an agency signature, and information related to a creditor signature. The method further comprises providing 64 the first information related to the at least one unique payment certificate and the information related to the creditor signature to a central certificate agency 300 and obtaining 66 information related to a validity of the first information related to the at least one unique payment certificate and information related to a reassigned information related to at least one unique payment certificate from the central certificate agency 300. The reassigned information related to the at least one payment certificate is based on the information related to the creditor signature and the information related to the agency signature. The method further comprises providing 68 information related to a transaction status; and determining 70 the information related to the transaction status based on the information related to the validity of the first information related to the at least one unique payment certificate.

Fig. 10 shows an embodiment of a method for a central certificate agency 300. The method comprises obtaining 82 information related to an identification signature and providing 84 second information related to at least one unique payment certificate. The method further comprises obtaining 86 first information related to at least one unique payment certificate and information related to a creditor signature. The first information related to at least one unique payment certificate is based on information related to the identification signature, information related to an agency signature, and the information related to the creditor signature. The method further comprises providing 88 information related to a validity of the first information related to the at least one unique payment certificate and information related to a reassigned information related to at least one unique payment certificate. The method further comprises determining 90 the second information related to the at least one unique payment certificate based on the information related to the identification signature and information related to the agency signature. The method further comprises determining 92 the information related to the validity of the first information related to the at least one unique payment certificate based on the information related to the agency signature, the information related to the creditor signature, and the information related to the identification signature. The method further comprises determining 94 the information related to the reassigned information related to the at least one unique payment certificate based on the first information related to at least one unique payment certificate, the information related to the creditor signature, and the information related to the agency signature.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiments may provide a first information related to at least one mobile certificate to pay for vehicle related costs, which are caused through substantial items (refueling, spare parts), service items (toll, parking, ticketing, navigation, car-wash, inspection), energy (charging/restoring), permissions/insurances (taxes, charges, insurance premium) and/or preventive maintenance (INDUSTRIE 4.0), which may support new business models and a value creation chain. A load dependent controlling and timing of the vehicles traffic in metropolitan areas and his outside areas may also be provided by embodiments. In at least some embodiments, mobile certificates may provide communication between vehicles and other traffic related entities.

Embodiments may provide a coordination between vehicles and traffic related entities and may reduce idle times through a streamlined payment procedure. Embodiments may further provide regulation of transportation systems by balancing a traffic load.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) suitable for providing first information related to at least one unique payment certificate to a creditor (200), the apparatus (10) comprising
at least one interface (12) to obtain second information related to the at least one unique payment certificate from a central certificate agency (300) and third information related to a request for the at least one unique payment certificate from the creditor (200), and to provide the first information related to the at least one unique payment certificate to the creditor (200);
a storage module (14) to store information related to unique payment certificates; and
a control module (16) to provide the second information related to the at least one unique payment certificate to the storage module (14), to obtain the second information related to the at least one unique payment certificate from the storage module (14), and to determine the first information related to the at least one unique payment certificate based on the second information related to the at least one unique payment certificate and the third information related to the request for the at least one unique payment certificate.

2. The apparatus (10) of claim 1, wherein the apparatus (10) further comprises information related to an identification signature, and wherein the second information related to at least one unique payment certificate is based on the information related to the identification signature and information related to an agency signature for the central certificate agency (300).

3. The apparatus (10) of claim 2, wherein the control module (16) is further configured to provide the first information related to at least one unique payment certificate based on the information related to the identification signature, the information related to the agency signature, and information related to a creditor signature for the creditor (200).

4. The apparatus (10) of claim 1, wherein the creditor (200) corresponds to a traffic related creditor corresponding to at least one element of the group of a toll station, a road charging station, a parking station, a filling station, a service station, an insurance provider, a tax collection infrastructure, a driving permission agency, a vehicle repair shop, a vehicle manufacturer, a replacement part manufacturer, a replacement part provider, a fast food restaurant, a convenience store, and a retail business.

5. The apparatus (10) of claim 1, wherein a unique payment certificate corresponds to a sequence of binary digits according to a predetermined protocol format, wherein a unique payment certificate is based on at least one element of the group of an encryption cipher, a digital signature, and a digital watermark, wherein the first information related to the at least one unique payment certificate corresponds to a network packet for a communication network, the network packet comprising at least one unique payment certificate, and/or wherein the first information related to the at least one unique payment certificate corresponds to a mobile certificate comprising at least one unique payment certificate.

6. The apparatus (10) of claim 1, wherein the control module (16) is configured to provide information related to a notification, via the at least one interface (12), in case an aggregated monetary amount of unique payment certificates in the storage module (14) falls below a notification threshold, wherein the at least one interface (12) is further configured to obtain information related to a purchase request, in response to the information related to the notification, and wherein the control module (16) is further configured to obtain information related to at least one further unique payment certificate from the central certificate agency (300) and to store the information related to at least one further unique payment certificate using the storage module (14).

7. The apparatus (10) of claim 1, wherein the at least one interface (12) is further configured to obtain information related to a current cost of one or more routes, and wherein the control module (16) is further configured to provide information related to one or more preferred routes based on the information related to the current cost of the one or more routes and/or wherein the control module (16) is configured to provide information related to aggregated payments for a specified length of time, via the at least one interface (12), and/or wherein the control module (16) is configured to communicate via a network (400), and wherein the control module (16) is further configured to use a mobile certificate comprising at least one unique payment certificate as identification towards one or more network devices (420) comprised in the network (400).

8. A vehicle (100) comprising the apparatus (10) of claim 5, wherein the network packet comprises at least one unique payment certificate and information related to the vehicle (100) and/or wherein the network packet comprises at least one unique payment certificate and information related to the vehicle (100) and wherein the control module (16) is further configured to provide information related to a condition of one or more components of the vehicle (100).

9. An apparatus (20) suitable for a creditor (200), the apparatus (20) comprising
at least one interface (22):
to obtain first information related to at least one unique payment certificate, wherein the first information related to the at least one unique payment certificate is based on information related to an identification signature, information related to an agency signature, and information related to a creditor signature,
to provide the first information related to the at least one unique payment certificate and the information related to the creditor signature to a central certificate agency (300),
to obtain information related to a validity of the first information related to the at least one unique payment certificate and information related to a reassigned information related to at least one unique payment certificate from the central certificate agency (300), wherein the reassigned information related to the at least one payment certificate is based on the information related to the creditor signature and the information related to the agency signature,
and to provide information related to a transaction status; and
a control module (24) to determine the information related to the transaction status based on the information related to the validity of the first information related to the at least one unique payment certificate.

10. The apparatus (20) of claim 9, wherein the control module (24) is configured to determine the information related to the transaction status based on the first information related to the at least one unique payment certificate and information related to compromised certificates, wherein the information related to the comprised certificates comprises information related to one or more invalidated certificates.

11. An apparatus (30) for a central certificate agency (300), the apparatus (30) comprising
At least one interface (32) to:
obtain information related to an identification signature,
provide second information related to at least one unique payment certificate,
obtain first information related to at least one unique payment certificate and information related to a creditor signature, wherein the first information related to at least one unique payment certificate is based on information related to the identification signature, information related to an agency signature, and information related to a creditor signature,
provide information related to a validity of the first information related to the at least one unique payment certificate and information related to a reassigned information related to at least one unique payment certificate; and
a control module (34) to:
determine the second information related to the at least one unique payment certificate based on the information related to the identification signature and information related to the agency signature,
determine the information related to the validity of the first information related to the at least one unique payment certificate based on the information related to the agency signature, the information related to the creditor signature, and the information related to the identification signature,
determine the information related to the reassigned information related to the at least one unique payment certificate based on the first information related to the at least one unique payment certificate, the information related to the creditor signature, and the information related to the agency signature.

12. A method suitable for providing first information related to at least one unique payment certificate to a creditor (200), the method comprising
obtaining (42) second information related to the at least one unique payment certificate from a central certificate agency (300),
obtaining (44) third information related to a request for the at least one unique payment certificate from the creditor (200),
providing (46) the first information related to the at least one unique payment certificate to the creditor (200);
storing (48) information related to unique payment certificates; and
providing (50) the second information related to the at least one unique payment certificate to the storage module (14),
obtaining (52) the second information related to the at least one unique payment certificate from the storage module (14),
determining (54) the first information related to the at least one unique payment certificate based on the second information related to the at least one unique payment certificate and the third information related to the request for the at least one unique payment certificate.

13. A method suitable for a creditor (200), the method comprising
obtaining (62) first information related to at least one unique payment certificate, wherein the first information related to at least one unique payment certificate is based on information related to an identification signature, information related to an agency signature, and information related to a creditor signature,
providing (64) the first information related to the at least one unique payment certificate and the information related to the creditor signature to a central certificate agency (300),
obtaining (66) information related to a validity of the first information related to the at least one unique payment certificate and information related to a reassigned information related to at least one unique payment certificate from the central certificate agency (300), wherein the reassigned information related to the at least one payment certificate is based on the information related to the creditor signature and the information related to the agency signature,
providing (68) information related to a transaction status; and
determining (70) the information related to the transaction status based on the information related to the validity of the first information related to the at least one unique payment certificate.

14. A method for a central certificate agency (300), the method comprising
obtaining (82) information related to an identification signature,
providing (84) second information related to at least one unique payment certificate, obtaining (86) first information related to at least one unique payment certificate and information related to a creditor signature, wherein the first information related to at least one unique payment certificate is based on information related to the identification signature, information related to an agency signature, and the information related to the creditor signature,
providing (88) information related to a validity of the first information related to the at least one unique payment certificate and information related to a reassigned information related to at least one unique payment certificate; and
determining (90) the second information related to the at least one unique payment certificate based on the information related to the identification signature and information related to the agency signature,
determining (92) the information related to the validity of the first information related to the at least one unique payment certificate based on the information related to the agency signature, the information related to the creditor signature, and the information related to the identification signature,
determining (94) the information related to the reassigned information related to the at least one unique payment certificate based on the first information related to at least one unique payment certificate, the information related to the creditor signature, and the information related to the agency signature.

15. A computer program having a program code for performing at least one of the methods of claims 12, 13 and 14, when the computer program is executed on a computer, a processor, or a programmable hardware component.

## Amended claims

### Amended claims in accordance with Rule 137(2) EPC.

1. An apparatus (10) suitable for providing first information related to at least one unique payment certificate to a creditor (200), the apparatus (10) comprising
at least one interface (12) to obtain second information related to the at least one unique payment certificate from a central certificate agency (300) and third information related to a request for the at least one unique payment certificate from the creditor (200), and to provide the first information related to the at least one unique payment certificate to the creditor (200);
a storage module (14) to store information related to unique payment certificates; and
a control module (16) to provide the second information related to the at least one unique payment certificate to the storage module (14), to obtain the second information related to the at least one unique payment certificate from the storage module (14), and to determine the first information related to the at least one unique payment certificate based on the second information related to the at least one unique payment certificate and the third information related to the request for the at least one unique payment certificate,
wherein a unique payment certificate corresponds to a sequence of binary digits according to a predetermined protocol format and wherein a unique payment certificate is based on at least one element of the group of an encryption cipher, a digital signature, and a digital watermark.

2. The apparatus (10) of claim 1, wherein the apparatus (10) further comprises information related to an identification signature, and wherein the second information related to at least one unique payment certificate is based on the information related to the identification signature and information related to an agency signature for the central certificate agency (300).

3. The apparatus (10) of claim 2, wherein the control module (16) is further configured to provide the first information related to at least one unique payment certificate based on the information related to the identification signature, the information related to the agency signature, and information related to a creditor signature for the creditor (200).

4. The apparatus (10) of claim 1, wherein the creditor (200) corresponds to a traffic related creditor corresponding to at least one element of the group of a toll station, a road charging station, a parking station, a filling station, a service station, an insurance provider, a tax collection infrastructure, a driving permission agency, a vehicle repair shop, a vehicle manufacturer, a replacement part manufacturer, a replacement part provider, a fast food restaurant, a convenience store, and a retail business.

5. The apparatus (10) of claim 1, wherein the first information related to the at least one unique payment certificate corresponds to a network packet for a communication network, the network packet comprising at least one unique payment certificate, and/or wherein the first information related to the at least one unique payment certificate corresponds to a mobile certificate comprising at least one unique payment certificate.

6. The apparatus (10) of claim 1, wherein the control module (16) is configured to provide information related to a notification, via the at least one interface (12), in case an aggregated monetary amount of unique payment certificates in the storage module (14) falls below a notification threshold, wherein the at least one interface (12) is further configured to obtain information related to a purchase request, in response to the information related to the notification, and wherein the control module (16) is further configured to obtain information related to at least one further unique payment certificate from the central certificate agency (300) and to store the information related to at least one further unique payment certificate using the storage module (14).

7. The apparatus (10) of claim 1, wherein the at least one interface (12) is further configured to obtain information related to a current cost of one or more routes, and wherein the control module (16) is further configured to provide information related to one or more preferred routes based on the information related to the current cost of the one or more routes and/or wherein the control module (16) is configured to provide information related to aggregated payments for a specified length oftime, via the at least one interface (12), and/or wherein the control module (16) is configured to communicate via a network (400), and wherein the control module (16) is further configured to use a mobile certificate comprising at least one unique payment certificate as identification towards one or more network devices (420) comprised in the network (400).

8. A vehicle (100) comprising the apparatus (10) of claim 5, wherein the network packet comprises at least one unique payment certificate and information related to the vehicle (100) and/or wherein the network packet comprises at least one unique payment certificate and information related to the vehicle (100) and wherein the control module (16) is further configured to provide information related to a condition of one or more components of the vehicle (100).

9. An apparatus (20) suitable for a creditor (200), the apparatus (20) comprising
at least one interface (22):
to obtain first information related to at least one unique payment certificate, wherein the first information related to the at least one unique payment certificate is based on information related to an identification signature, information related to an agency signature, and information related to a creditor signature,
to provide the first information related to the at least one unique payment certificate and the information related to the creditor signature to a central certificate agency (300),
to obtain information related to a validity of the first information related to the at least one unique payment certificate and information related to a reassigned information related to at least one unique payment certificate from the central certificate agency (300), wherein the reassigned information related to the at least one payment certificate is based on the information related to the creditor signature and the information related to the agency signature,
and to provide information related to a transaction status; and
a control module (24) to determine the information related to the transaction status based on the information related to the validity of the first information related to the at least one unique payment certificate,
wherein a unique payment certificate corresponds to a sequence of binary digits according to a predetermined protocol format and wherein a unique payment certificate is based on at least one element of the group of an encryption cipher, a digital signature, and a digital watermark.

10. The apparatus (20) of claim 9, wherein the control module (24) is configured to determine the information related to the transaction status based on the first information related to the at least one unique payment certificate and information related to compromised certificates, wherein the information related to the comprised certificates comprises information related to one or more invalidated certificates.

11. An apparatus (30) for a central certificate agency (300), the apparatus (30) comprising
At least one interface (32) to:
obtain information related to an identification signature,
provide second information related to at least one unique payment certificate,
obtain first information related to at least one unique payment certificate and information related to a creditor signature, wherein the first information related to at least one unique payment certificate is based on information related to the identification signature, information related to an agency signature, and information related to a creditor signature,
provide information related to a validity of the first information related to the at least one unique payment certificate and information related to a reassigned information related to at least one unique payment certificate; and
a control module (34) to:
determine the second information related to the at least one unique payment certificate based on the information related to the identification signature and information related to the agency signature,
determine the information related to the validity of the first information related to the at least one unique payment certificate based on the information related to the agency signature, the information related to the creditor signature, and the information related to the identification signature,
determine the information related to the reassigned information related to the at least
one unique payment certificate based on the first information related to the at least one unique payment certificate, the information related to the creditor signature, and the information related to the agency signature,
wherein a unique payment certificate corresponds to a sequence of binary digits according to a predetermined protocol format and wherein a unique payment certificate is based on at least one element of the group of an encryption cipher, a digital signature, and a digital watermark.

12. A method suitable for providing first information related to at least one unique payment certificate to a creditor (200), the method comprising
obtaining (42) second information related to the at least one unique payment certificate from a central certificate agency (300),
obtaining (44) third information related to a request for the at least one unique payment certificate from the creditor (200),
providing (46) the first information related to the at least one unique payment certificate to the creditor (200);
storing (48) information related to unique payment certificates; and
providing (50) the second information related to the at least one unique payment certificate to the storage module (14),
obtaining (52) the second information related to the at least one unique payment certificate from the storage module (14),
determining (54) the first information related to the at least one unique payment certificate based on the second information related to the at least one unique payment certificate and the third information related to the request for the at least one unique payment certificate,
wherein a unique payment certificate corresponds to a sequence of binary digits according to a predetermined protocol format and wherein a unique payment certificate is based on at least one element of the group of an encryption cipher, a digital signature, and a digital watermark.

13. A method suitable for a creditor (200), the method comprising
obtaining (62) first information related to at least one unique payment certificate, wherein the first information related to at least one unique payment certificate is based on information related to an identification signature, information related to an agency signature, and information related to a creditor signature,
providing (64) the first information related to the at least one unique payment certificate and the information related to the creditor signature to a central certificate agency (300),
obtaining (66) information related to a validity of the first information related to the at least one unique payment certificate and information related to a reassigned information related to at least one unique payment certificate from the central certificate agency (300), wherein the reassigned information related to the at least one payment certificate is based on the information related to the creditor signature and the information related to the agency signature,
providing (68) information related to a transaction status; and
determining (70) the information related to the transaction status based on the information related to the validity of the first information related to the at least one unique payment certificate
wherein a unique payment certificate corresponds to a sequence of binary digits according to a predetermined protocol format and wherein a unique payment certificate is based on at least one element of the group of an encryption cipher, a digital signature, and a digital watermark.

14. A method for a central certificate agency (300), the method comprising obtaining (82) information related to an identification signature,
providing (84) second information related to at least one unique payment certificate,
obtaining (86) first information related to at least one unique payment certificate and information related to a creditor signature, wherein the first information related to at least one unique payment certificate is based on information related to the identification signature, information related to an agency signature, and the information related to the creditor signature,
providing (88) information related to a validity of the first information related to the at least one unique payment certificate and information related to a reassigned information related to at least one unique payment certificate; and
determining (90) the second information related to the at least one unique payment certificate based on the information related to the identification signature and information related to the agency signature,
determining (92) the information related to the validity of the first information related to the at least one unique payment certificate based on the information related to the agency signature, the information related to the creditor signature, and the information related to the identification signature,
determining (94) the information related to the reassigned information related to the at least one unique payment certificate based on the first information related to at least one unique payment certificate, the information related to the creditor signature, and the information related to the agency signature
wherein a unique payment certificate corresponds to a sequence of binary digits according to a predetermined protocol format and wherein a unique payment certificate is based on at least one element of the group of an encryption cipher, a digital signature, and a digital watermark.

15. A computer program having a program code for performing at least one of the methods of claims 12, 13 and 14, when the computer program is executed on a computer, a processor, or a programmable hardware component.
